# EUROPEAN PATENT APPLICATION

(11) **EP 1 953 590 A1**
(43) Date of publication of application: **06.08.2008**
(21) Application number: 06823324.6
(22) Date of filing: 13.11.2006
(51) Int. Cl.: G02F 1/167

(54) **METHOD FOR FABRICATING BARRIER RIB AND SUBSTRATE FOR ELECTROPHORETIC DISPLAY MEDIUM AND ELECTROPHORETIC DISPLAY MEDIUM**

(30) Priority: 25.11.2005 JP 2005339927
(71) Applicant: Brother Kogyo Kabushiki Kaisha, Nagoya-shi, Aichi-ken 467-8561 (JP)
(72) Inventor: HATTORI, Yasuhiro, Nagoya-shi Aichi 467-8562 (JP); YOSHIMURA, Chisato, Nagoya-shi Aichi 467-8562 (JP)
(74) Representative: Smith, Samuel Leonard
(86) International application number: PCT/JP2006/322550
(87) International publication number: WO 2007/060851

(57) **Abstract**

According to the conventional method for forming partition members on substrates using photolithography as disclosed in the patent reference 1, the partition members often peel away from the substrates at the interface therebetween due to the differences in the thermal expansion coefficients and the like of the substrates and partition members, since these two are formed of different materials. The present invention provides an electrophoretic display medium (100) including a first substrate (1) and a second substrate (2) disposed in opposition to each other, a dispersion medium (7) provided between the first substrate (1) and the second substrate (2) with charged particles (6) dispersed therein, and partitioning parts (1b) dividing a small space between the first substrate (1) and the second substrate (2). The manufacturing method includes an electrode-forming step, a die-pressing step and a die-removing step, through which partitioning parts (1b) and the substrates are integrally formed by thermal imprint.

## Description

### Technical Field

The present invention relates to an electrophoretic display medium and a method of manufacturing partition members and substrates in an electrophoretic display medium.

### Background Art

One electrophoretic display medium well known in the art is configured of a pair of substrates arranged so that one surface of each opposes the other, and a dispersion medium injected between the substrates. Charged particles carrying either a positive or negative charge are dispersed in the dispersion medium.

In this type of electrophoretic display medium, one of the substrates is formed of a transparent material. The outer surface of the transparent substrate functions as a display surface. When electric fields are applied to the electrophoretic display medium, the charged particles migrate between the substrates, forming desired images on the display surface based on this migration. One such electrophoretic display medium has two types of charged particles injected between the substrates, each type having a different color and polarity, whereby displayed images are changed based on the type of particles collected at the substrate on the display surface side. Another electrophoretic display medium has one type of charged particles injected between the substrates, and displayed images are changed based on what is collected at the substrate on the display surface side. That is, the color of the charged particles is displayed when charged particles collect at the substrate of the display surface side, while the color of the dispersion medium is displayed when charged particles collect at the substrate other than the display surface side.

With these types of electrophoretic display medium, the specific gravities of the charged particles and the dispersion medium are usually different. Consequently, the charged particles have a tendency to be distributed unevenly between the substrates in the electrophoretic display medium. To resolve this problem, partition members have been disposed between the pair of substrates, dividing the space between the substrates into a plurality of compartments, thereby achieving an electrophoretic display medium that can prevent the uneven distribution of charged particles.

Patent reference 1 describes a method of forming partition members between the substrates of the electrophoretic display medium using photolithography.

Patent Reference 1: Japanese patent application No. 2002-72258

### Disclosure of Invention

### Technical Problem

However, since the substrates and partition members are formed of different materials, the thermal expansion coefficients and the like of the two also differ. Accordingly, when applying the conventional method described above for forming the partition members on the substrates using photolithography, the partition members often peel away from the substrates at the interface therebetween.

In view of the foregoing, it is an object of the present invention to provide an electrophoretic display medium having substrates and partition members that are unlikely to separate from each other, and a method of manufacturing partition members and substrates in the electrophoretic display medium so as to be unlikely to separate from each other.

In order to achieve the above object, the invention according to claim 1 discloses a method of manufacturing partition members and substrates in an electrophoretic display medium characterized by including a first substrate and a second substrate disposed in opposition to each other, a dispersion medium provided between the first substrate and the second substrate with charged particles dispersed therein, and partitioning parts dividing a small space between the first substrate and the second substrate. The method includes an electrode-forming step for forming an electrode in a plurality of electrode-forming region provided on one surface of the first substrate along with a plurality of the partition-forming regions, a die-pressing step for applying pressure to the first substrate with a die having a plurality of recessed parts for forming the partitioning parts so that the recessed parts are pressed against the partition-forming regions and portions of the first substrate are forced inside the recessed parts, thereby forming the partitioning parts having the same shape as the recessed parts on the first substrate, and a die-removing step for separating the die from the first substrate after the die-pressing step.

Claim 2 discloses the method of manufacturing partition members and substrates in an electrophoretic display medium according to the invention of claim 1 characterized by further including a heating step for heating the first substrate. Also, this method is
characterized in that the die-pressing step is performed after the heating step for forming the partitioning parts having the same shape as the recessed parts on the first substrate by protruding a portion of the first substrate.

Claim 3 discloses the method of manufacturing partition members and substrates in an electrophoretic display medium according to the invention of claim 2 characterized by including a contacting step for placing the die in contact with the first substrate. Further, the heating step is performed to heat both the die and the first substrate while the die is in contact with the first substrate.

Claim 4 discloses the method of manufacturing partition members and substrates in an electrophoretic display medium according to the invention recited in any one of claims 2 through 3 further including a cooling step for cooling the first substrate after the die-pressing step. Also, the die-removing step is performed after the cooling step to separate the die from the first substrate.

According to the invention of claim 5, in the method of manufacturing partition members and substrates in an electrophoretic display medium according to the invention of claim 1, the electrode formed in the electrode-forming step includes a plurality of electric field applying parts for applying electric fields to the charged particles, and a plurality of connecting parts for interconnecting the electric field applying parts.

According to the invention of claim 6, in the method of manufacturing partition members and substrates in an electrophoretic display medium according to the invention of claim 5, the electrode is formed on the first substrate in the electrode-forming step so that the first substrate has larger partition-forming regions than openings of the recessed parts formed in the die.

According to the invention of claim 7, in the method of manufacturing partition members and substrates in an electrophoretic display medium according to the invention of claim 1, the first substrate is transparent, and the electrode formed on the first substrate in the electrode-forming step is transparent.

According to the invention of claim 8, in the method of manufacturing partition members and substrates in an electrophoretic display medium according to the invention of claim 1, the electrode formed in the electrode-forming step has a greater deflection temperature under load than that of the first substrate, and the first substrate is heated in the heating step to a temperature lower than the softening temperature of the electrode.

According to the invention of claim 9, in the method of manufacturing partition members and substrates in an electrophoretic display medium according to the invention of claim 1, the die pressed against the first substrate in the die-pressing step has recessed parts with a cross section that tapers from the opening toward the inner surface thereof when viewed from a prescribed direction.

According to the invention of claim 10, in the method of manufacturing partition members and substrates in an electrophoretic display medium according to the invention of claim 1, the first substrate heated in the heating step is formed of a thermoplastic resin.

According to the invention of claim 11, in the method of manufacturing partition members and substrates in an electrophoretic display medium according to the invention of claim 10, the first substrate heated in the heating step is formed of polyethylene terephthalate.

According to the invention of claim 12, in the method of manufacturing partition members and substrates in an electrophoretic display medium according to the invention of claim 10, the first substrate heated in the heating step is formed of polyethylene naphthalate.

According to the invention of claim 13, in the method of manufacturing partition members and substrates in an electrophoretic display medium according to the invention of claim 1, the electrode formed in the electrode-forming step is formed of a transparent material.

According to the invention of claim 14, in the method of manufacturing partition members and substrates in an electrophoretic display medium according to the invention of claim 13, the electrode formed in the electrode-forming step is formed of indium tin oxide.

According to the invention of claim 15, in the method of manufacturing partition members and substrates in an electrophoretic display medium according to the invention of claim 1, the die pressed against the first substrate in the die-pressing step has the recessed parts arranged in a prescribed regular pattern.

Claim 16 discloses an electrophoretic display medium including a first substrate and a second substrate disposed in opposition to each other, a dispersion medium provided therebetween with charged particles dispersed therein, and partitioning parts dividing a small space between the first substrate and the second substrate. The first substrate and the partitioning parts of the electrophoretic display medium are manufactured according to a manufacturing method characterized by including an electrode-forming step for forming an electrode in the electrode-forming region provided on one surface of the first substrate along with the partition-forming regions, a die-pressing step for applying pressure to the first substrate with a die having recessed parts for forming the partitioning parts so that the recessed parts are pressed against the partition-forming regions and portions of the first substrate are forced inside the recessed parts, thereby forming the partitioning parts having the same shape as the recessed parts on the first substrate, and a die-removing step for separating the die from the first substrate after the die-pressing step.

### Advantageous Effects

The method of manufacturing the partition members and the substrates in an electrophoretic display medium disclosed in claim 1 can provide an electrophoretic display medium having substrates and partition members that are unlikely to separate from each other, since the first substrate and partition members are integrally formed of the same material.

Further, since the electrode is formed in the electrode-forming region and the partition members are formed in the partition-forming regions, the partition members and the first substrate can be produced in the electrophoretic display medium in which the first substrate is provided with the electrode for applying electric field to the charged particles.

According to the method of manufacturing partition members and substrates in an electrophoretic display medium according to claim 2, in addition to the effects of the invention recited in claim 1, since the first substrate is heated in the heating step and pressed against the die in the die-pressing step after the substrate softens due to the heat, forming the partition members on the first substrate is easy to be performed.

According to the method of manufacturing partition members and substrates in an electrophoretic display medium according to claim 3, in addition to the effects of the invention recited in claim 2, since the first substrate is heated with the die placed in contact with the substrate in the heating step, the surface on which the partition members are to be formed can be heated uniformly, thereby preventing the partition members from being unevenly formed. Further, since the heat does not easily escape from the first substrate during heating, the loss of the heating energy becomes less, thereby shortening the time required for performing the heating step.

According to the method of manufacturing partition members and substrates in an electrophoretic display medium according to claim 4, in addition to the effects of the invention recited in any one of claims 2 through 3, since the first substrate softened in the heating step becomes firmer than that in the die-pressing step by being cooled in the cooling step, the first substrate is easier to be separated from the die in the die-removing step.

According to the method of manufacturing partition members and substrates in an electrophoretic display medium according to claim 5, in addition to the effects of the invention recited in claim 1, since the plurality of electric field applying parts is interconnected by the plurality of connecting parts, the partition members and the first substrate can be produced in the electrophoretic display medium in which single driving mechanism for applying voltages to the plurality of electric field applying parts is provided.

According to the method of manufacturing partition members and substrates in an electrophoretic display medium according to claim 6, in addition to the effects of the invention recited in claim 5, the die does not cause the electrode to deform when pressed against the substrate in the die-pressing step because the openings of the recessed parts do not overlap the electrode-forming regions with the electrode thereon. Hence, with this method, it is possible to manufacture the partition members and the substrate having a suitable distance between electrodes in the electrophoretic display medium.

According to the method of manufacturing partition members and substrates in an electrophoretic display medium according to claim 7, in addition to the effects of the invention recited in claim 1, since the first substrate is transparent, the partition members and the substrate are manufactured in the electrophoretic display medium in which images can be displayed on the first substrate side surface.

According to the method of manufacturing partition members and substrates in an electrophoretic display medium according to claim 8, in addition to the effects of the invention recited in claim 1, since the first substrate is heated in the heating step to a temperature lower than the softening temperature of the electrode, the electrodes do not get squashed under the pressure applied through the die in the die-pressing step.

According to the method of manufacturing partition members and substrates in an electrophoretic display medium according to claim 9, in addition to the effects of the invention recited in claim 1, separating the first substrate from the die is easily performed in the die-removing step.

According to the method of manufacturing partition members and substrates in an electrophoretic display medium according to claim 10, in addition to the effects of the invention recited in claim 1, manufacturing the partition members and the substrate in the electrophoretic display medium is facilitated since the first substrate is formed of thermoplastic resin.

According to the method of manufacturing partition members and substrates in an electrophoretic display medium according to claim 11, in addition to the effects of the invention recited in claim 10, manufacturing the partition members and the substrate in the electrophoretic display medium is facilitated since the first substrate is formed of polyethylene terephthalate.

According to the method of manufacturing partition members and substrates in an electrophoretic display medium according to claim 12, in addition to the effects of the invention recited in claim 10, since the first substrate is formed of polyethylene naphthalate, the partition members and the substrate with greater heat and chemical resistance, gas barrier and UV barrier properties, and mechanical strength can be produced easier in the electrophoretic display medium than the case in which the first substrate is formed of polyethylene terephthalate as described in claim 11.

According to the method of manufacturing partition members and substrates in an electrophoretic display medium according to claim 13, in addition to the effects of the invention recited in claim 1, since the electrodes are formed of a transparent material, the partition members and the substrate having the transparent electrodes that the visible light can well pass therethrough can be produced in the electrophoretic display medium.

According to the method of manufacturing partition members and substrates in an electrophoretic display medium according to claim 14, in addition to the effects of the invention recited in claim 13, since the electrodes are formed of indium tin oxide, the substrate that adheres well to polyethylene terephthalate and polyethylene naphthalate is formed, and the partition members and the substrate having the transparent electrodes passing the visible light therethrough can be produced in the electrophoretic display medium.

According to the method of manufacturing partition members and substrates in an electrophoretic display medium according to claim 15, in addition to the effects of the invention recited in claim 1, pressures can be applied to the first substrate uniformly in the die-pressing step.

According to the electrophoretic display medium disclosed in claim 16, the substrates and the partition members are unlikely to separate from each other, since the first substrate and partition members are integrally formed of the same material.

### Brief Description of Drawings

Fig. 1 is a cross-sectional view of an electrophoretic display medium 100 according to a preferred embodiment;
Fig. 2 is a plan view of a second substrate 2 viewed from the surface side on which pixel electrodes 5 are formed;
Fig. 3 is a plan view of a partition-forming substrate 1 viewed from the surface side on which an electrode 4 is formed;
Fig. 4 is a cross-sectional view of a substrate 11 coated with an ITO film 12;
Fig. 5 is a cross-sectional view of the substrate 11 during an exposure process;
Fig. 6 is an enlarged plan view showing part of a mask 13 viewed along an irradiating direction of UV light;
Fig. 7 is a cross-sectional view of the substrate 11 after development;
Fig. 8 is a cross-sectional view of the substrate 11 after etching;
Fig. 9 is a cross-sectional view of the substrate 11 after removing residual negative photoresist;
Fig. 10 is an enlarged plan view showing part of the substrate 11 viewed from the surface on which the electrode 4 is formed;
Fig. 11 is a cross-sectional view of the substrate 11 disposed in a pressing device with a heating mechanism;
Fig. 12 is an enlarged view showing part of the pressing surface of a die 20;
Fig. 13 is a cross-sectional view of the substrate 11 during a die-pressing step when parts of the substrate 11 project into recessed parts 21 of the die;
Fig. 14 is a cross-sectional view of the completed partition-forming substrate 1;
Fig. 15 is a cross-sectional view of a recessed part 21 and the substrate 11 when the opening of the recessed part 21 is larger than a partition-forming region 9b;
Fig. 16 is a cross-sectional view of the partition-forming substrate 1 showing part of the electrode 4 formed in a partitioning part 1b;
Fig. 17 is a cross-sectional view of a die 25;
Fig. 18 is an enlarged view showing a sample pressing surface of a die 20; and
Fig. 19 is an enlarged view showing another sample pressing surface of the die 20.

### Explanation of Reference

- 1: partition-forming substrate
- 1a: first substrate part
- 1b: partitioning part
- 2: second substrate
- 3: spacer
- 4: electrode
- 4a: electric field applying parts
- 4b: connecting part
- 5: pixel electrode
- 6: charged particle
- 7: dispersion medium
- 8: electric field controller
- 9a: electrode-forming region
- 9b: partition-forming region
- 11: substrate
- 12: ITO film
- 13: mask
- 13a: glass plate
- 13b: light-shielding members
- 14: negative photoresist
- 15: support plate
- 16: support plate
- 20: die
- 21: recessed parts
- 22: substrate-holding unit
- 25: die
- 100: electrophoretic display medium

### Best Mode for Carrying Out the Invention

Hereinafter, a preferred embodiment of the present invention will be described while referring to the accompanying drawings. First, described is an electrophoretic display medium 100 with partition members and substrates formed therein according to the method of manufacturing partition members and substrates in an electrophoretic display medium according to the present invention described later.

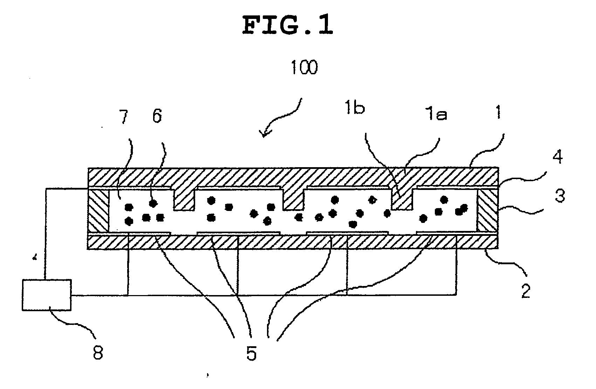

Fig. 1 is a cross-sectional view of the electrophoretic display medium 100. The electrophoretic display medium 100 includes a partition-forming substrate 1, an electrode 4 formed on a surface of the partition-forming substrate 1, a second substrate 2, pixel electrodes 5 formed on a surface of the second substrate 2, a spacer 3, charged particles 6, a dispersion medium 7, and an electric field controller 8. The electrophoretic display medium 100 displays images on the partition-forming substrate 1 side.

The electrode 4 is formed on one surface of the partition-forming substrate 1, and partitioning parts 1b are formed on the same surface. The pixel electrodes 5 are formed on one surface of the second substrate 2.

The partition-forming substrate 1 and second substrate 2 are positioned so that the electrode 4 and pixel electrodes 5 oppose each other.

Both the partition-forming substrate 1 and second substrate 2 are formed of polyethylene terephthalate (hereinafter abbreviated as "PET"), which is a clear thermoplastic resin.

Forming both the partition-forming substrate 1 and second substrate 2 of PET makes the electrophoretic display medium 100 flexible. Hence, the electrophoretic display medium 100 can be used even when folded.

The electrode 4 and the pixel electrodes 5 are transparent electrodes formed of indium tin oxide (hereinafter abbreviated as "ITO").

The spacer 3 is positioned between the partition-forming substrate 1 and second substrate 2 in order to maintain a gap of 25 µm between the electrode 4 and pixel electrodes 5. The spacer 3 is disposed along the periphery of the partition-forming substrate 1 and second substrate 2 and has a height of 25 µm.

The charged particles 6 and the dispersion medium 7 are provided in the space defined by the partition-forming substrate 1, second substrate 2, and spacer 3. The dispersion medium 7 keeps the plurality of charged particles 6 dispersed therein in this defined space.

The dispersion medium 7 is a liquid with insulating properties, such as an aromatic hydrocarbon solvent (for example, benzene, toluene, or xylene), an aliphatic hydrocarbon solvent (for example, a normal or cyclic paraffinic hydrocarbon solvent such as hexane or cyclohexane, an isoparaffinic hydrocarbon solvent, or kerosene), a halogenated hydrocarbon solvent (for example, chloroform, trichloroethylene, dichloromethane, trichlorotrifluoroethylene, or ethyl bromide), an oily polysiloxane such as silicone oil, or a high-purity oil.

The charged particles 6 are charged with a negative polarity and colored black. The dispersion medium 7 having an insulating property is colored white.

The partition-forming substrate 1 is integrally formed of a first substrate part 1a, and the partitioning parts 1b. The partitioning parts 1b protrude from the first substrate part 1a toward the second substrate 2.

Hence, the partitioning parts 1b of the electrophoretic display medium 100 divide the space between the substrates into a plurality of compartments for preventing an uneven distribution of charged particles 6.

In cross section, the partitioning parts 1b appear as lines extending vertically downward from the first substrate part 1a toward the second substrate 2 at regular intervals horizontally. The partitioning parts 1b protrude 20 µm from the first substrate part 1a so that a gap of 5 µm exists between the bottom surfaces of the partitioning parts 1b and the surface of the second substrate 2 on which the pixel electrodes 5 are formed.

The electrode 4 and pixel electrodes 5 are electrically connected to the electric field controller 8 respectively. Since the manner of this connection is essentially unrelated to the present invention, a detailed description of the connection will not be given.

The electric field controller 8 produces electric fields between the electrode 4 and pixel electrodes 5 by controlling the voltage applied to the electrode 4 and voltages applied to the pixel electrodes 5. In this way, the electric field controller 8 controls migration of the negatively charged particles 6 in the dispersion medium 7.

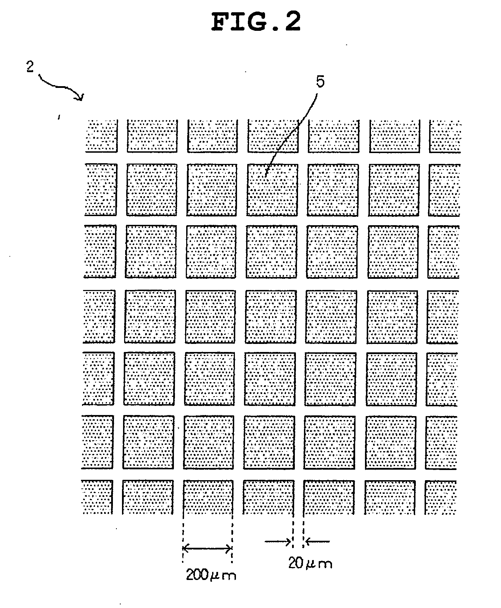

Fig. 2 is a plan view of the second substrate 2 seen from the surface on which the pixel electrodes 5 are formed. As shown in Fig. 2, each of the pixel electrodes 5 formed on the second substrate 2 has a substantially square shape, with the length of one side being 200 µm. A plurality of the pixel electrodes 5 is formed on the second substrate 2.

The pixel electrodes 5 are arranged on the second substrate 2 in a regular matrix shape having a gap of 20 µm between vertically and horizontally neighboring pixel electrodes 5, as shown in Fig. 2.

Each pixel electrode 5 is electrically connected to the electric field controller 8 via thin film transistors (TFT; not shown). Accordingly, the electric field controller 8 can individually control the amounts of voltages applied to each pixel electrode 5.

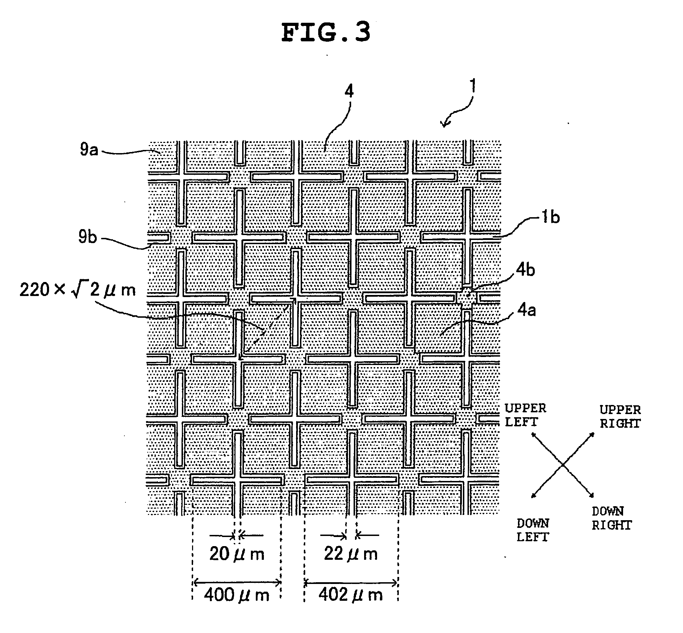

Fig. 3 is a plan view of the partition-forming substrate 1 seen from the surface on which the electrode 4 is formed. As shown in Fig. 3, the partition-forming substrate 1 includes an electrode-forming region 9a on which the electrode 4 is formed, and partition-forming regions 9b on which the partitioning parts 1b are formed.

As shown in Fig. 3, the partition-forming regions 9b are plus-shaped regions formed of two elongated rectangular regions intersecting orthogonally and overlapping at their centers. The elongated rectangles are 22 µm x 402 µm in size.

A plurality of the partition-forming regions 9b are arranged at prescribed regular intervals on the partition-forming substrate 1. Here, one of the partition-forming regions 9b, arbitrarily chosen among the plurality of the partition-forming regions 9b, is focused for explanation. In the preferred embodiment, four center points of another four partition-forming regions 9b are positioned a distance of 220×√2 µm in any diagonal (45°) direction, i.e., in Fig. 3, diagonally up and right, diagonally up and left, diagonally down and right, and diagonally down and left, respectively from the center point of the focused partition-forming region 9b.

The plus-shaped partitioning parts 1b are formed within the partition-forming regions 9b so as to protrude from the first substrate part 1a. The partitioning parts 1b are formed of two rectangular protrusions intersecting orthogonally at their center points. The rectangular shape of the partitioning parts 1b is 20 µm x 400 µm.

The plus-shaped partitioning parts 1b are arranged so that their centers overlap the centers of the corresponding partition-forming regions 9b.

The electrode-forming region 9a is the region in Fig. 3 other than the partition-forming regions 9b described above. The electrode 4 is formed in the electrode-forming region 9a.

The electrode 4 has electric field applying parts 4a and connecting parts 4b. Each electric field applying part 4a is square-shaped with a side length of 198 µm and functions to control the electric field applied to the negatively charged particles 6.

The connecting parts 4b occupy plus-shaped portions between partition-forming regions 9b and electric field applying parts 4a and function to electrically connect the electric field applying parts 4a. Hence, the electrode 4 is a single electrode sheet configured with all electric field applying parts 4a electrically connected by the connecting parts 4b.

Next, the operations of the electrophoretic display medium 100 will be described. If the electric field controller 8 applies a voltage of 0 V to the electrode 4 and a voltage of -40 V to a pixel electrode 5, a downward electric field is produced between the electrodes, causing the negatively charged particles 6 to migrate toward the partition-forming substrate 1. Accordingly, the black color of the charged particles 6 is displayed in the top surface of the electrophoretic display medium 100.

Alternatively, if the electric field controller 8 applies a voltage of 0 V to the electrode 4 and a voltage of 40 V to a pixel electrode 5, an upward electric field is generated between the electrodes, causing the negative charged particles 6 to migrate toward the second substrate 2. Accordingly, the white color of the dispersion medium 7 is displayed in the top surface of the electrophoretic display medium 100.

By independently controlling the voltages applied to the plurality of pixel electrodes 5, the electric field controller 8 can switch the color displayed for each pixel. The size of the pixels is defined by the size of the pixel electrodes 5.

In the conventional electrophoretic display medium, the partition members and substrates are formed separately and of different materials and, thus, have different thermal expansion coefficients. Consequently, changes in the ambient temperature often cause the partition members to peel off the substrates at the point of connection between the two because the two materials have different ratios of contraction and expansion.

Further, in recent years, flexible electrophoretic display media have been proposed. However, since the partition members and substrates are formed of separate members in such an electrophoretic display medium, the partition members tend to peel off the substrates at the points of connection when the electrophoretic display medium is folded.

Further, since the dispersion medium used in the electrophoretic display medium is required to have an insulating property, the material most often chosen is an organic solvent, such as an aromatic hydrocarbon solvent, an aliphatic hydrocarbon solvent, a halogenated hydrocarbon solvent (for example, chloroform, trichloroethylene, dichloromethane, trichlorotrifluoroethylene, or ethyl bromide), polysiloxane, or a high-purity oil. However, the acrylic resin selected as the material for partition members and substrates in the conventional lithography technique is by nature nonresistant to organic solvents such as halogenated hydrocarbon solvents. Accordingly, the organic solvent weakens the adhesive strength, particularly at the interfacing parts of the substrates and partition members, making the partition members susceptible to peeling off the substrates.

In contrast, there is no worry of the partitioning parts 1b peeling off the first substrate part 1a with the electrophoretic display medium 100 of the preferred embodiment, since the partitioning parts 1b and first substrate part 1a are integrally formed.

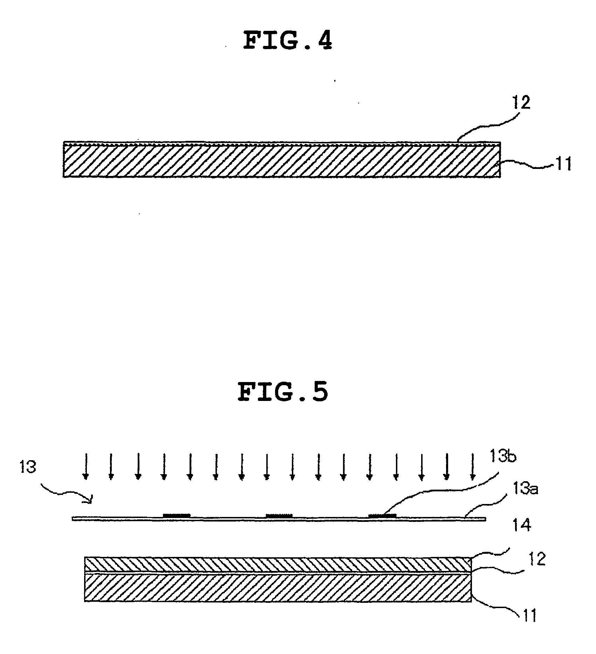

Next, the method of manufacturing the partition-forming substrate 1 having the partitioning parts 1b and first substrate part 1a will be described with reference to Figs. 4 through 14.

First, an ITO film 12 is formed over one entire surface of a substrate 11 formed of PET. Fig. 4 shows a cross-sectional view of the substrate 11 on which the ITO film 12 is formed.

The sputtering technique, for example, may be used to form the ITO thin film on the surface of a resin film substrate.

Next, the ITO film 12 is coated with a negative photoresist 14 that hardens by exposure to UV light. The photoresist 14 is exposed to UV light through a mask 13 on which is formed a prescribed pattern of light-shielding members 13b. Fig. 5 shows a cross-sectional view of the substrate 11 being exposed to light.

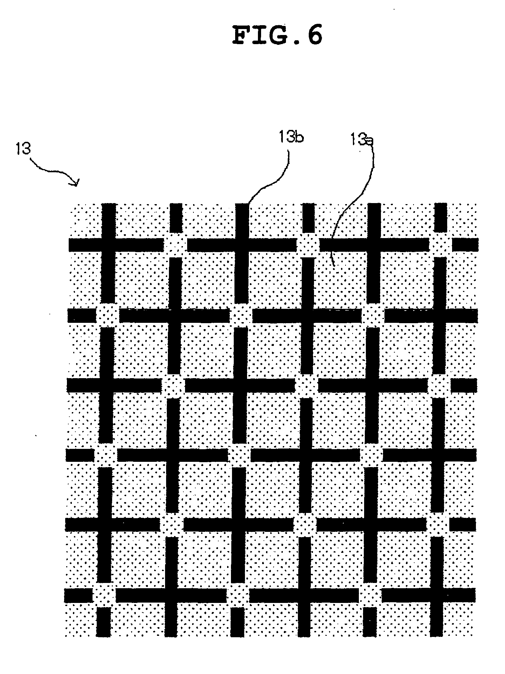

Fig. 6 is an enlarged plan view showing part of the mask 13 seen along the direction that UV light is irradiated. The mask 13 is configured of a glass plate 13a that transmits UV light, and the light-shielding members 13b formed on top of the glass plate 13a. As shown in Fig. 6, the light-shielding members 13b are formed in the same plus-shape as the partition-forming regions 9b described above and are arranged at regular intervals. The details of this arrangement are identical to the arrangement of the partition-forming regions 9b described above. The portions of the photoresist 14 exposed to UV light harden.

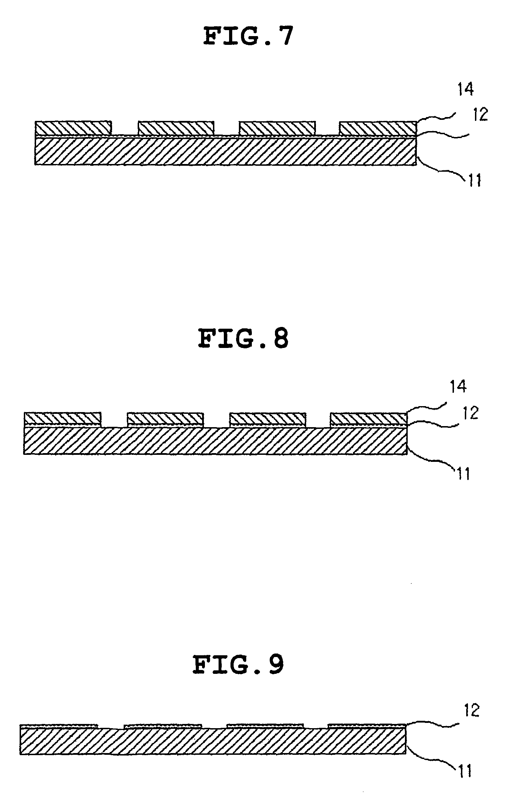

Next, the unexposed areas of the photoresist 14 are developed with a liquid developer, resulting in the substrate 11 shown in cross section in Fig. 7. After the photoresist 14 is developed with the liquid developer, only portions of the photoresist 14 that were exposed to the UV light remain on the substrate 11, while the unexposed parts are removed.

Next, portions of the ITO film 12 exposed when parts of the photoresist 14 were removed are etched with an acidic aqueous solution. An aqueous hydrochloric acid solution or an aqueous hydrochloric acid ferric chloride solution is commonly used as the acidic aqueous solution. Fig. 8 shows a cross section of the substrate 11 after etching.

Next, the photoresist 14 remaining on the substrate 11 is melted with a photoresist stripping solution and removed from the substrate 11. Fig. 9 shows a cross-sectional view of the substrate 11 after removing the negative photoresist.

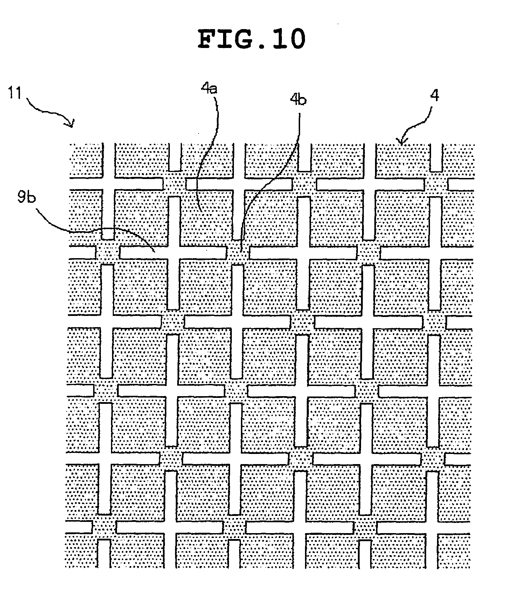

In this way, the electrode 4 having a prescribed pattern is formed on the substrate 11 of ITO. Fig. 10 is an enlarged plan view showing part of the substrate 11 viewed from the surface on which the electrode 4 is formed. As described above, the electrode 4 formed on the substrate 11 includes the electric field applying parts 4a and the connecting parts 4b. The regions on which the electrode 4 is not formed constitute the partition-forming regions 9b.

The method of forming the electrode 4 on the substrate 11 described above with reference to Figs. 4 through 10 corresponds to the electrode-forming step of the present invention.

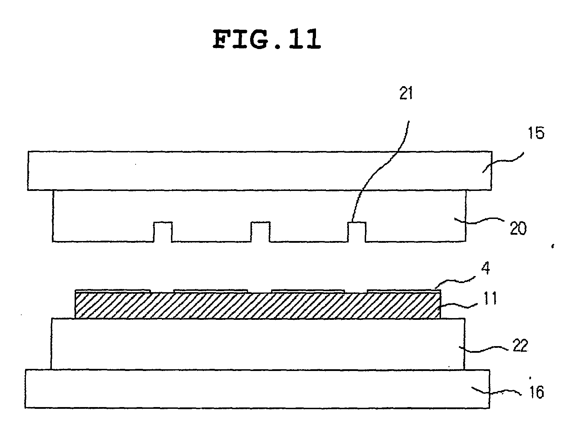

Next, a method of manufacturing the partition-forming substrate 1 from the substrate 11 with the electrode 4 formed thereon will be described with reference to Figs. 11 through 14.

The method of manufacturing the partition-forming substrate 1 from the above substrate 11 includes a contacting step for placing a die 20 described later in contact with the substrate 11, a heating step for heating the substrate 11, a die-pressing step for pressing the die 20 described later against the substrate 11, a cooling step for cooling the substrate 11, and a die-removing step for separating the die 20 from the substrate 11.

Prior to performing the contacting step, the above substrate 11 having the electrode 4 formed thereon is disposed in a pressing device having a heating mechanism (not shown). The die 20 and a substrate-holding unit 22 are provided in the pressing device. Fig. 11 shows a cross-sectional view of the substrate 11 disposed in the pressing device with heating mechanism.

The method of mounting the substrate 11 in the pressing device will be described next.

Since the pressing device with heating mechanism is not essential to the present invention, the entire device is not shown in the drawings. However, the pressing device includes support plates 15 and 16 disposed with a surface of each plate opposing the other.

The support plate 16 is fixed at a prescribed position in the pressing device so that the top surface of the support plate 16 is level. The support plate 16 has a built-in heater for applying heat.

The support plate 15 is disposed in the pressing device at a position opposing and vertically above the support plate 16 and is capable of moving up and down. The distance in which the support plate 15 can move vertically can be set based on the object being pressed. The support plate 15 has a built-in heater for applying heat to the substrate 11.

The die 20 is fixed to the vertically movable support plate 15 with the pressing surface of the die 20 facing downward. The substrate-holding unit 22 is fixed to the support plate 16 with the pressing surface facing upward. Both the die 20 and the substrate-holding unit 22 are detachably fixed to the support plate 15 and support plate 16, respectively.

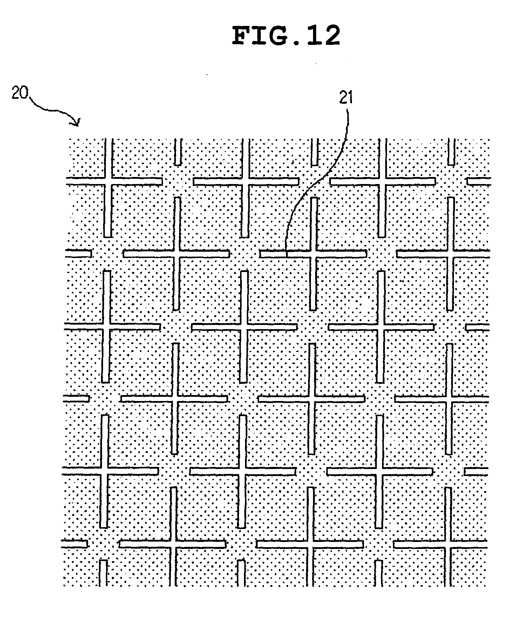

A plurality of recessed parts 21 is formed in the flat pressing surface of the die 20 at prescribed positions. Fig. 12 is an enlarged view of a portion of the pressing surface on the die 20. As shown in Fig. 12, the opening portion of each recessed parts 21 has a plus-shape formed of two 20 µm x 400 µm rectangles intersecting orthogonally at their center points.

The recessed parts 21 are arranged regularly in the pressing surface of the die 20, according to the same arrangement as that of the partitioning parts 1b described above. The recessed parts 21 are formed at a depth of 20 µm.

The substrate-holding unit 22 has a flat pressing surface. In the heating step, the substrate 11 on which the electrode 4 is formed is disposed on the flat pressing surface of the substrate-holding unit 22. At this time, the substrate 11 is oriented with the surface on which the electrode 4 is formed facing upward.

The substrate 11 is also positioned so that the center points of the partition-forming regions 9b on the substrate 11 are aligned with the center points of the recessed parts 21 formed in the substrate-holding unit 22.

In the contacting step, the support plate 15 is moved downward until the pressing surface of the die 20 contacts the substrate 11.

In the heating step, the heaters built into both the support plate 15 and support plate 16 heat the substrate 11. The heat generated by these built-in heaters passes through the die 20 and substrate-holding unit 22 to heat the substrate 11 to about 100°C. At this time, the die 20 is also heated to 100°C.

Since the substrate 11 is formed of PET, which softens at a temperature of about 80-90°C, the substrate 11 can easily be softened and formed when heated to 100°C.

Here, the upper temperature limit of ITO (the deflection temperature under load, for example) is much higher than that of PET. Hence, even when heated to 100°C, the electrode 4 formed of ITO does not soften, but remains firm.

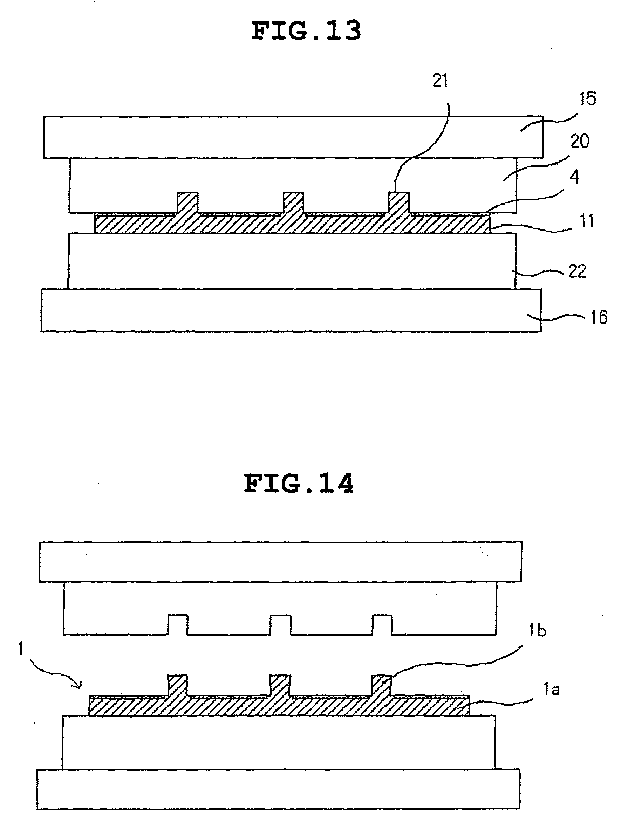

In the subsequent die-pressing step, the die 20 is pressed against the substrate 11 and held in a pressing state for a fixed time. As a consequence, portions of the softened substrate 11 are forced into the recessed parts 21, forming protruding parts of the same shape as the recessed parts 21 on the substrate 11. The protruding parts forced into the recessed parts 21 form the partitioning parts 1b of the electrophoretic display medium 100 described above. The portion of the substrate 11 that does not project into the recessed parts 21 becomes the first substrate part 1a of the electrophoretic display medium 100 described above. Fig. 13 shows a cross section of the substrate 11 when portions of the substrate 11 are pressed into the recessed parts 21 in the die-pressing step.

Next in the cooling step, the heaters in the support plates 15 and 16 are set to a temperature of 60°C, for example, and the substrate 11 is left for a prescribed time until cooled to around 60°C and becoming firmer than during the die-pressing step. At this time, the die 20 and substrate 11 can easily be separated.

In the die-removing step, the die 20 is separated from the substrate 11, completing the partition-forming substrate 1. Fig. 14 is a cross-sectional view of the completed partition-forming substrate 1.

Since the partitioning parts 1b and the first substrate part 1a of the partition-forming substrate 1 are formed as an integral unit according to the above method, the electrophoretic display medium 100 provided with this partition-forming substrate 1 can be used without worrying that the partitioning parts 1b will separate from the first substrate part 1a.

As described above, the opening in each recessed part 21 has a plus-shape formed of two 20 µm x 400 µm rectangles intersecting orthogonally so that their centers overlap. Each of the partition-forming regions 9b also has a plus-shape formed of two 22 µm x 402 µm rectangles intersecting orthogonally so as to overlap at their centers.

Since the openings in the recessed parts 21 are smaller than the size of the partition-forming regions 9b, the die 20 does not cause the electrode 4 to deform when pressed against the substrate 11 in the die-pressing step because the openings of the recessed parts 21 do not overlap the electrode 4. Hence, with this method, it is possible to manufacture a partition-forming substrate 1 having a suitable distance between electrodes in the electrophoretic display medium 100.

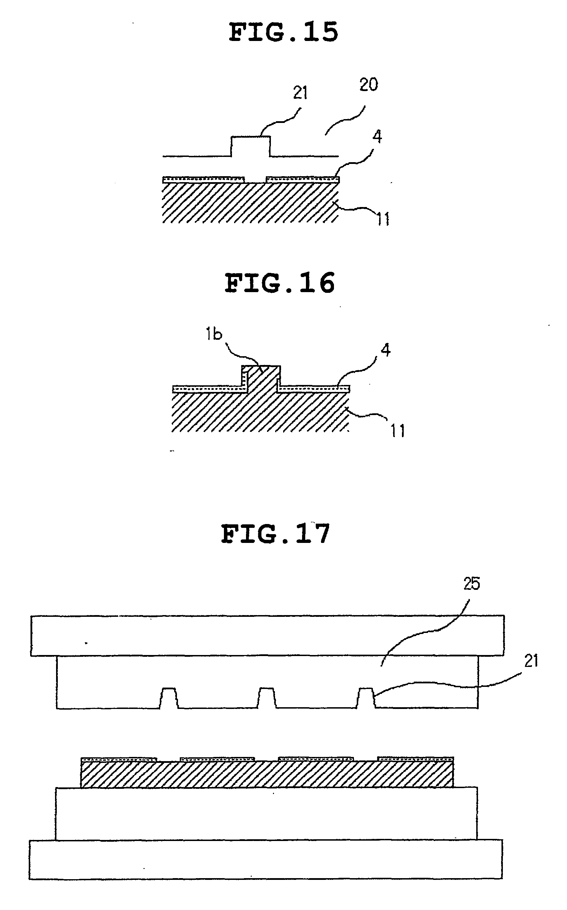

Fig. 15 illustrates a case in which the opening of the recessed part 21 is larger than the partition-forming region 9b. In this case, a portion of the electrode 4 overlaps the opening of the recessed part 21 when the die 20 is pressed against the substrate 11. Consequently, as the PET of the substrate 11 attempts to fill the recessed part 21, the pressure of the PET bends the portion of the electrode 4 that overlaps the opening to the recessed part 21, forming the partitioning parts 1b with part of the electrode 4 included therein, as shown in Fig. 16. If the partition-forming substrate 1 formed in this way is used in the electrophoretic display medium 100, electrical discharge may occur between the portion of the electrode 4 forming part of the partitioning parts 1b and the pixel electrode 5, potentially resulting in a electrophoretic display medium 100 that cannot display images properly.

Even if such electrical discharge does not occur, the electrode 4 bent in this way can adversely affect the quality of the display by not producing a uniform electric field throughout the dispersion medium 7.

However, the above problems do not occur with the preferred embodiment since the opening of the recessed part 21 is made smaller than the size of the partition-forming region 9b. Further, making the partition-forming regions 9b slightly larger than the openings of the recessed parts 21 facilitates positioning of the die 20 and substrate 11.

In the preferred embodiment described above, the partitioning parts 1b are formed using the die 20, but the partitioning parts 1b may be formed using a die 25 shown in Fig. 17 instead of the die 20.

Fig. 17 is a cross-sectional view of the die 25. As shown in Fig. 17, the recessed parts 21 formed in the die 25 taper from the opening toward the inside surface when viewed from a prescribed direction. Employing the die 25 having this configuration reduces resistance on the substrate 11 when separating the die from the substrate 11 in the die-removing step, thereby facilitating such separation.

While the electrophoretic display medium and the method of manufacturing partition members and substrates in an electrophoretic display medium of the present invention has been described in detail with reference to a specific embodiment thereof, it would be apparent to those skilled in the art that many modifications and variations may be made therein without departing from the spirit of the invention, the scope of which is defined by the attached claims.

In the preferred embodiment described above, the partitioning parts 1b are formed using the die 20 having a plurality of the recessed parts 21 arranged regularly over the flat surface of the die 20. However, it is possible to form the partitioning parts 1b using a roller-like die having recessed parts 21 arranged at regular intervals over the surface thereof by rolling the die over the softened substrate 11.

Further, while the charged particles 6 are negatively charged black particles and the dispersion medium 7 is white in the preferred embodiment described above, the charged particles 6 and the dispersion medium 7 are not limited to this combination. For example, charged particles 6 of a different color may be used.

In the electrophoretic display medium 100 of the preferred embodiment described above, the dispersion medium 7 is described as a liquid with insulating properties, such as an aromatic hydrocarbon solvent (for example, benzene, toluene, or xylene), an aliphatic hydrocarbon solvent (for example, a normal or cyclic paraffinic hydrocarbon solvent such as hexane or cyclohexane, an isoparaffinic hydrocarbon solvent, or kerosene), a halogenated hydrocarbon solvent (for example, chloroform, trichloroethylene, dichloromethane, trichlorotrifluoroethylene, or ethyl bromide), an oily polysiloxane such as silicone oil, or a high-purity oil. However, the electrophoretic display medium 100 may be injected with a volatile gas as the dispersion medium 7 instead.

Further, while the substrate 11 is cooled in a cooling step in the preferred embodiment described above, the cooling step may be omitted by simply stopping heating, depending on how to heat the substrate, or a temperature range.

Further, while the preferred embodiment described a method of forming the partition-forming substrate 1 from the substrate 11 having the electrode 4 formed thereon, the electrode 4 need not be formed on the substrate 11 if the mechanism for generating electric fields is provided in a separate device.

In the preferred embodiment described above, the electrophoretic display medium 100 displays an image with a single electrode 4 and a plurality of pixel electrodes 5 corresponding to the number of pixels, but the electrodes are not limited to this configuration. For example, a matrix-like drive electrode may be provided on both the partition-forming substrate 1 and the second substrate 2, with each column of electrodes formed on the partition-forming substrate 1 being interconnected. Further, while TFTs are connected to the pixel electrodes 5 in the preferred embodiment, the method of driving the pixel electrodes 5 is not limited to this configuration.

Further, while the partition-forming regions 9b are formed larger than the size of the openings in the recessed parts 21 in the preferred embodiment described above, the sizes of the openings in the recessed parts 21 and the partition-forming regions 9b may be the same if the recessed parts 21 and partition-forming regions 9b can be positioned precisely.

Further, while the substrate 11 is formed of PET in the preferred embodiment, the substrate 11 may be formed of another material, such as glass. Alternatively, the substrate 11 may be formed of polyethylene naphthalate (PEN), polyether sulfone (PES), polyarylate (PAR), polycarbonate (PC), or the like, since partition members and substrates can be produced easier in the electrophoretic display medium by these materials because of the greater heat and chemical resistance, gas barrier and UV barrier properties, and mechanical strength than the substrate 11 formed of PET.

Further, while the electrode 4 is formed of ITO in the preferred embodiment described above, the electrode 4 may be formed of another material, such as tin oxide (TO), indium oxide (IO), or indium zinc oxide (IZO). The electrode 4 may also be formed of a noble metal such as gold, silver, or palladium deposited in a film of 50-150 Å.

In the preferred embodiment described above, the recessed parts 21 having plus-shaped openings are formed in the pressing surface of the die 20 in a regular pattern. However, recessed parts 21 with openings of another shape may be formed in a regular pattern.

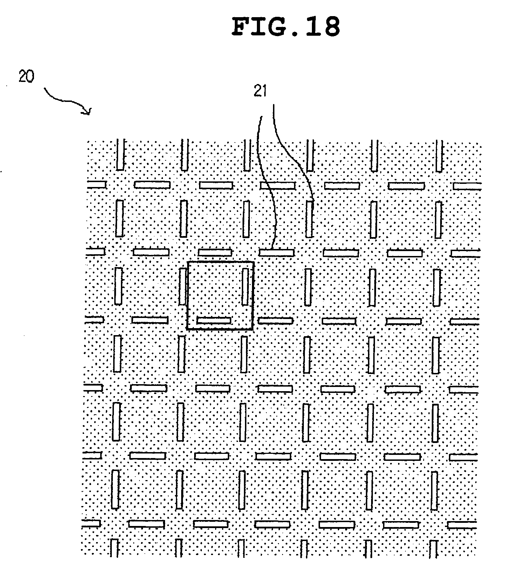

In this case, the pattern of recessed parts 21 may combine recessed parts 21 of different shapes, as shown in Fig. 18. In the example of Fig. 18, the die 20 includes two types of recessed parts 21: recessed parts 21 arranged with the long side of the openings oriented vertically, and recessed parts 21 arranged with the long side of the openings oriented horizontally. The set of recessed parts 21 within the square-shaped border shown in Fig. 18 makes up one unit of the pattern.

More specifically, the pattern includes recessed parts 21 formed in a rectangular shape of 20 µm x 180 µm with the longitudinal direction of the opening oriented horizontally, and recessed parts 21 formed in a rectangular shape of 20 µm x 180 µm with the longitudinal direction of the opening oriented vertically.

The center of a recessed part 21 having a longitudinal direction oriented horizontally is positioned 110×√2 µm diagonally to the left and below the center of a recessed part 21 having a longitudinal direction oriented vertically.

The recessed parts 21 having a longitudinal direction oriented horizontally will be referred to as first recessed parts. A plurality of the first recessed parts is spaced horizontally with a distance of 220 µm between the centers of adjacent parts. The first recessed parts are also spaced vertically with a distance of 220 µm between the centers of adjacent parts. The recessed parts 21 having a longitudinal direction oriented vertically will be referred to as second recessed parts. The second recessed parts are arranged similarly to the first recessed parts.

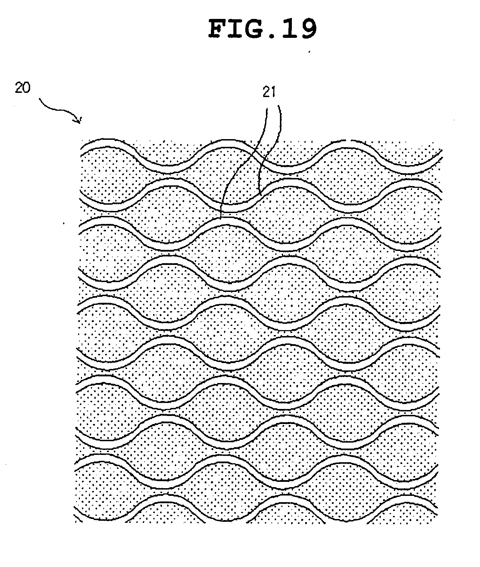

Fig. 19 shows another arrangement of the recessed parts 21. In the example shown in Fig. 19, recessed parts 21 having wave-like openings with a width of 20 µm are arranged at regular intervals vertically. The waveforms of recessed parts 21 positioned vertically adjacent to each other have opposite crests and troughs, and are separated by 20 µm at the nearest point.

Further, while the die-pressing step is performed after heating the substrate 11 in the heating step in the preferred embodiment described above, it should be obvious that the heating step may be omitted when the substrate 11 is formed of a material that can be processed without heating.

### Industrial Applicability

The electrophoretic display medium and method of manufacturing partition members and substrates in an electrophoretic display medium of the present invention are extremely useful as for an electrophoretic display medium that varies an image display based at least on the color of charged particles displayed.

## Claims

1. A method of manufacturing partition members (1b) and substrates (1) in an electrophoretic display medium (100) comprising a first substrate (1) and a second substrate (2) disposed in opposition to each other, a dispersion medium (7) provided between the first substrate (1) and the second substrate (2) and having charged particles (6) dispersed therein, and partitioning parts (1b) dividing a small space between the first substrate (1) and the second substrate (2), the manufacturing method comprising:
an electrode-forming step for forming an electrode (4) in an electrode-forming region (9a) provided on one surface of the first substrate (1) along with partition-forming regions (9b);
a die-pressing step for applying pressure to the first substrate (1) with a die (20) having recessed parts (21) for forming the partitioning parts (1b) so that the recessed parts (21) are pressed against the partition-forming regions (9b), such that portions of the first substrate (1) are forced inside the recessed parts (21), forming the partitioning parts (1b) having the same shape as the recessed parts (21) on the first substrate (1); and
a die-removing step for separating the die (20) from the first substrate (1) after the die-pressing step.

2. The method of manufacturing partition members and substrates in an electrophoretic display medium according to claim 1, further comprising a heating step for heating the first substrate (1),
wherein the die-pressing step is performed after the heating step for forming the partitioning parts (1b) having the same shape as the recessed parts (21) on the first substrate (1) by protruding a portion of the first substrate.

3. The method of manufacturing partition members and substrates in an electrophoretic display medium according to claim 2, further comprising a contacting step for placing the die (20) in contact with the first substrate (1),
wherein the heating step is performed to heat both the die (20) and the first substrate (1) while the die (20) is in contact with the first substrate (1).

4. The method of manufacturing partition members and substrates in an electrophoretic display medium according to claim 2 or claim 3, further comprising a cooling step for cooling the first substrate (1) after the die-pressing step,
wherein the die-removing step is performed after the cooling step to separate the die (20) from the first substrate (1)

5. The method of manufacturing partition members and substrates in an electrophoretic display medium according to claim 1, wherein the electrode (4) is formed in the electrode-forming step, the electrode (4) comprising electric field applying parts (4a) for applying electric fields to the charged particles, and connecting parts (4b) for interconnecting the electric field applying parts (4a).

6. The method of manufacturing partition members and substrates in an electrophoretic display medium according to claim 5, wherein the electrode (4) is formed on the first substrate (1) in the electrode-forming step, the first substrate (1) having larger partition-forming regions (9b) than openings of the recessed parts (21) formed in the die (20).

7. The method of manufacturing partition members and substrates in an electrophoretic display medium according to claim 1, wherein the first substrate (1) is transparent, and the electrode (4) formed on the first substrate (1) in the electrode-forming step is transparent.

8. The method of manufacturing partition members and substrates in an electrophoretic display medium according to claim 1, wherein the electrode (4) formed in the electrode-forming step has a greater deflection temperature under load than the first substrate (1); and
the first substrate (1) is heated in the heating step to a temperature lower than the softening temperature of the electrode (4).

9. The method of manufacturing partition members and substrates in an electrophoretic display medium according to claim 1, wherein the die (25) pressed against the first substrate (1) in the die-pressing step has recessed parts (21) with a cross section that tapers from the opening toward the inner surface thereof when viewed from a prescribed direction.

10. The method of manufacturing partition members and substrates in an electrophoretic display medium according to claim 1, wherein the first substrate (1) heated in the heating step is formed of a thermoplastic resin.

11. The method of manufacturing partition members and substrates in an electrophoretic display medium according to claim 10, wherein the first substrate (1) heated in the heating step is formed of polyethylene terephthalate.

12. The method of manufacturing partition members and substrates in an electrophoretic display medium according to claim 10, wherein the first substrate (1) heated in the heating step is formed of polyethylene naphthalate.

13. The method of manufacturing partition members and substrates in an electrophoretic display medium according to claim 1, wherein the electrode (4) formed in the electrode-forming step is formed of a transparent material.

14. The method of manufacturing partition members and substrates in an electrophoretic display medium according to claim 13, wherein the electrode (4) formed in the electrode-forming step is formed of indium tin oxide.

15. The method of manufacturing partition members and substrates in an electrophoretic display medium according to claim 1, wherein the die (20, 25) pressed against the first substrate (1) in the die-pressing step has the recessed parts (21) arranged in a prescribed regular pattern.

16. An electrophoretic display medium comprising:
a first substrate (1) and a second substrate (2) disposed in opposition to each other;
a dispersion medium (7) provided between the first substrate (1) and the second substrate (2) and having charged particles (6) dispersed therein; and
partitioning parts (1b) dividing a small space between the first substrate (1) and the second substrate (2),
wherein the first substrate (1) and the partitioning parts (1b) of the electrophoretic display medium are manufactured according to a manufacturing method comprising:
an electrode-forming step for forming an electrode (4) in the electrode-forming region (9a) provided on one surface of the first substrate (1) along with the partition-forming regions (9b);
a die-pressing step for applying pressure to the first substrate (1) with a die (20) having recessed parts (21) for forming the partitioning parts (1b) so that the recessed parts (21) are pressed against the partition-forming regions (9b), such that portions of the first substrate (1) are forced inside the recessed parts (21), forming the partitioning parts (1b) having the same shape as the recessed parts (21) on the first substrate (1); and
a die-removing step for separating the die (20) from the first substrate (1) after the die-pressing step.
